(19) Europäisches Patentamt
European Patent Office
Office européen des brevets

(11) Veröffentlichungsnummer: **0 027 930**
**B1**

(12) # EUROPÄISCHE PATENTSCHRIFT

(45) Veröffentlichungstag der Patentschrift: **28.09.83**

(51) Int. Cl.³: **C 09 B 23/02**, D 06 P 1/16, C 08 J 3/20, C 09 B 57/00

(21) Anmeldenummer: **80106122.7**

(22) Anmeldetag: **09.10.80**

(54) **Wasserunlösliche Azlactonfarbstoffe, Verfahren zu ihrer Herstellung und deren Verwendung zum Färben oder Bedrucken von synthetischen Fasermaterialien.**

(30) Priorität: **19.10.79 DE 2942276**

(43) Veröffentlichungstag der Anmeldung: **06.05.81 Patentblatt 81/18**

(45) Bekanntmachung des Hinweises auf die Patenterteilung: **28.09.83 Patentblatt 83/39**

(84) Benannte Vertragsstaaten: **CH DE FR GB IT LI**

(56) Entgegenhaltungen:
**DE-A-1 809 949**
**DE-A-2 031 133**
**DE-A-2 225 546**
**DE-A-2 408 486**
**DE-A-2 415 819**
**DE-A-2 440 405**

(73) Patentinhaber: **HOECHST AKTIENGESELLSCHAFT, Postfach 80 03 20, D-6230 Frankfurt am Main 80 (DE)**

(72) Erfinder: **Schickfluss, Rudolf, Dr., Luisenstrasse 37, D-6233 Kelkheim (Taunus) (DE)**

**EP 0 027 930 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wasserunlösliche Azlactonfarbstoffe, Verfahren zu ihrer Herstellung und deren Verwendung zum Färben oder Bedrucken von synthetischen Fasermaterialien

Die vorliegende Erfindung betrifft neue, wasserunlösliche Azlactonfarbstoffe der allgemeinen Formel (1)

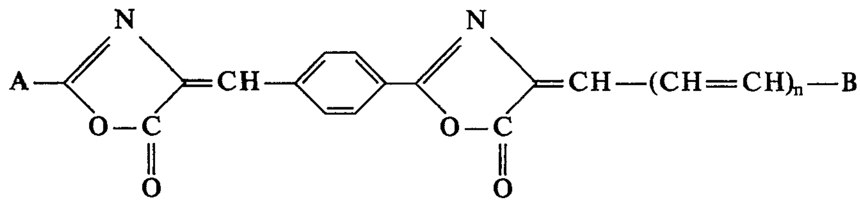
(1)

in welcher A einen Phenylrest, der durch Halogenatome, Alkyl- und/oder Alkoxygruppen mit 1 bis 4 Kohlenstoffatomen substituiert sein kann, einen Naphthyl- oder heterocyclischen Rest, B einen Phenylrest, der durch Halogenatome, Alkyl- und/oder Alkoxygruppen mit 1 bis 4 Kohlenstoffatomen, Nitro-, Cyano-, Acetamino-, Carbonsäuremethylester-, Carbonsäureäthylester-, Acetoxy-, Dimethylamino-, Diäthylamino- oder Methylendioxy-Gruppe substituiert sein kann, einen Naphthyl- oder heterocyclischen Rest und n die Zahl 0 oder 1 bedeuten, und Verfahren zu ihrer Herstellung.

Als heterocyclische Reste für A seien beispielsweise Reste des Furans, Pyridins, Chinolins und 1-Phenyl-5-pyrazolons genannt.

Als heterocyclische Reste für B seien beispielsweise solche des Furans, Pyridins, Indols, Thiophens, Pyrrols oder N-Alkyl-Pyrrols erwähnt.

Besonders wertvolle Farbstoffe der Formel (1) sind solche der Formel (2)

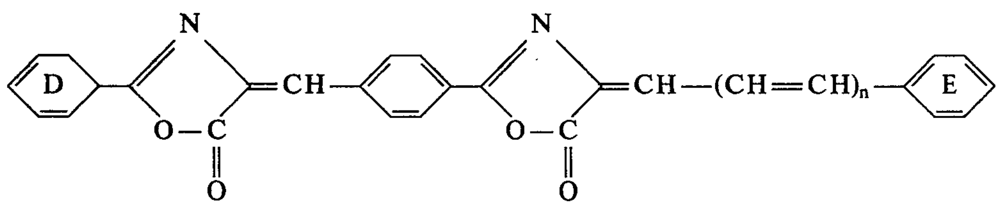
(2)

in welcher n die Zahl 0 oder 1 ist und der Phenylrest D durch Halogenatome, wie beispielsweise Chlor- oder Bromatome, Alkyl- und/oder Alkoxygruppen mit 1 bis 4 Kohlenstoffatomen, und der Phenylrest E durch Halogenatome, wie beispielsweise Chlor- oder Bromatome, Alkyl- und/oder Alkoxygruppen mit 1 bis 4 Kohlenstoffatomen, Nitro-, Cyan-, Acetamino-, Carbonsäuremethyl-, Carbonsäureäthylester-, Acetoxy-, Dimethylamino-, Diäthylamino- oder Methylendioxy-Gruppe substituiert sein kann.

Die Herstellung der Vorprodukte erfolgt in der Weise, daß Verbindungen der Formel (3)

$$A—CO—NH—CH_2—COOH \qquad (3)$$

bevorzugt Hippursäuren der Formel (4)

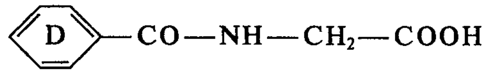
(4)

mit 4-Formylbenzoesäure (5)

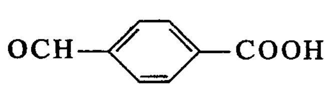
(5)

unter Wasserabspaltung kondensiert werden.

Das so erhaltene Reaktionsprodukt (6) bzw. (7)

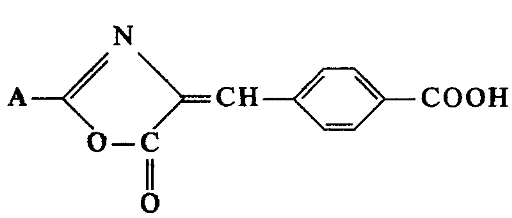
(6)

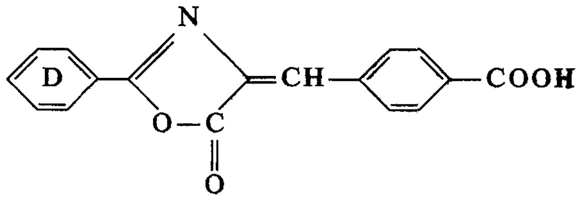

(7)

wird in bekannter Weise in die Verbindungen (8) bzw. (9)

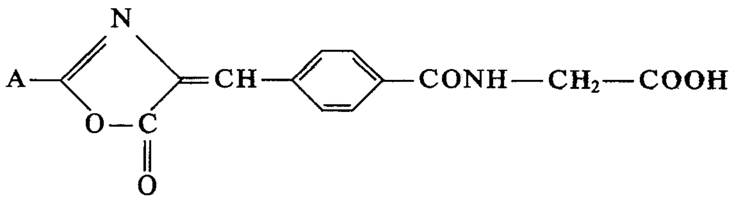

(8)

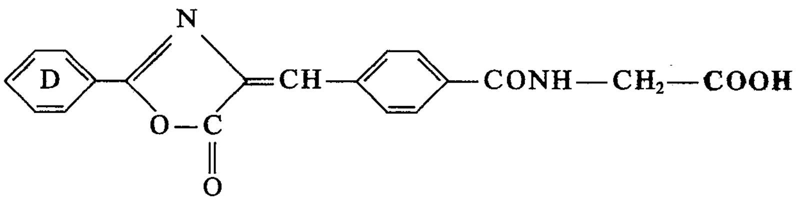

(9)

überführt.

Die Vorprodukte (8) und (9) weren in prinzipiell bekannter Weise mit Aldehyden der Formel (10) und (11)

$$B(CH{=}CH)_n{-}CHO \quad (10)$$

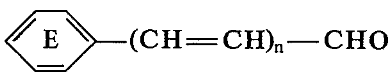

(11)

unter Wasserabspaltung zu den Farbstoffen der weiter oben genannten Formeln (1) und (2) kondensiert.

In den Formeln (3) und (4) sowie (6) bis (11) besitzen A, B, D, E und n die vorstehend genannten Bedeutungen.

Die Kondensation zu den Farbstoffen (1) bzw. (2) erfolgt zweckmäßigerweise in organischen Lösungsmitteln, wie beispielsweise in Acetanhydrid oder Trifluoressigsäureanhydrid, oder in Lösungsmittelgemischen, wie beispielsweise Mischungen aus Schwefeltrioxyd und Dimethylformamid oder Dioxan und Dicyclohexylcarbodiimid unter Anwendung von erhöhter Temperatur von etwa 40 bis 200° C, vorzugsweise zwischen etwa 80° und etwa 150° C. Von Vorteil für die Kondensation ist oft der Zusatz eines basisch wirkenden Mittels, wie beispielsweise Natriumacetat, Kaliumhydrogencarbonat, Kaliumcarbonat, Pyridin oder Triäthylamin.

Obwohl es in der Regel zweckmäßig ist, 1 Mol Vorprodukt der Formel (8) bzw. (9) mit 1 Mol Aldehyd der Formel (10) bzw. (11) umzusetzen, kann der Aldehyd auch in einem molaren Überschuß von bis etwa 10% eingesetzt werden.

Die neuen Farbstoffe eignen sich allein oder in Mischung, sei es untereinander oder in Mischung mit anderen Farbstoffen, vorzugsweise in zubereiteter Form, wie beispielsweise in wäßriger Dispersion oder in Lösung in organischen Lösungsmitteln oder in Emulsion oder Dispersion, die neben einem Lösungsmittel oder einem Lösungsmittelgemisch noch Wasser enthalten können, zum Färben oder Bedrucken von synthetischen Fasermaterialien, wie beispielsweise Fasern aus Cellulose-di-, -2½- und -triacetat, Polyamiden, insbesondere aber aus Polyestern, wie Polyäthylenterephthalaten.

Die vorstehend genannten synthetischen Fasermaterialien können zum Färben oder Bedrucken auch in Mischungen untereinander oder mit natürlichen Fasermaterialien, wie Cellulosefasern oder Wolle, vorliegen. Ferner können sie zum Färben in verschiedenen Verarbeitungszuständen, wie beispielsweise als Kammzug, Flocke, Fäden, Gewebe oder Gewirke, vorliegen.

Die Applikation der erfindungsgemäßen Farbstoffe erfolgt in prinzipiell bekannter Weise aus wäßriger Dispersion, kann jedoch bevorzugt auch aus organischen Lösungsmitteln vorgenommen werden. Die Dispergierung der Farbstoffe kann beispielsweise durch Mahlen in Gegenwart eines Dispergiermittels, wie beispielsweise des Kondensationsproduktes aus Formaldehyd und einer Napthalinsulfonsäure erfolgen.

Im übrigen richten sich die Färbebedingungen weitgehend nach der Art der vorliegenden synthetischen Fasermaterialien und deren Verarbeitungszustand.

Beispielsweise erfolgt das Färben von geformten Gebilden aus Celluloseacetat in einem Temperaturbereich von 75° bis 85°C. Cellulosetriacetatfasern werden bei Temperaturen zwischen etwa 90° und 125°C gefärbt. Das Aufbringen der Farbstoffe auf Polyamidfasermaterialien geschieht im Temperaturbereich zwischen etwa 90° und 120°C. Für das Färben von Fasermaterialien aus Polyestern benutzt man die hierfür bekannten Methoden, indem man das Fasermaterial in Gegenwart von Carriern, wie o- oder p-Phenylphenol, Methylnaphthalin oder Methylsalicylat, bei Temperaturen um 100° bis 130°C oder vorzugsweise ohne Anwendung von Carriern bei entsprechend höheren Temperaturen, beispielsweise zwischen etwa 120° und etwa 140°C färbt. Außerdem kann man insbesondere auch so verfahren, daß man die Farbstoffe durch Klotzen mit oder ohne Verdickungsmittel, beispielsweise mit Tragant-Verdickung, aufbringt und durch Hitzeeinwirkung, beispielsweise durch Dampf oder Trockenhitze während etwa 1/2 bis 30 Minuten bei Temperaturen im Bereich von etwa 100° bis 230°C fixiert. Das so gefärbte Material wird dann zur Verbesserung der Reibechtheit zweckmäßig von oberflächlich anhaftendem Farbstoff befreit, beispielsweise durch Spülen oder eine reduktive Nachbehandlung. Diese Nachbehandlung erfolgt im allgemeinen bei 60° bis 120°C in einer Flotte, die wäßrige Natronlauge, Natriumdithionit und ein nicht-ionogenes Waschmittel, wie beispielsweise ein Äthylenoxyd-Phenol-Additionsprodukt, enthält.

Zur Färbung der synthetischen Fasermaterialien aus organischen Lösemitteln kann man beispielsweise so verfahren, daß man bei Raumtemperatur oder darüber, vorzugsweise bei etwa 70° bis 130°C, gegebenenfalls unter Druck den Farbstoff aus der Lösung auf die Faser aufziehen läßt. Als Lösemittel für das Ausziehverfahren seien beispielsweise mit Wasser nicht mischbare Lösemittel mit Siedepunkten zwischen 40° und 170°C genannt, wie etwa die aliphatischen Halogenkohlenwasserstoffe, wie Methylenchlorid, Trichloräthan, Trichloräthylen, Perchloräthylen oder Trifluortrichloräthan. Die Lösemittel können auch in Mischung untereinander vorliegen und weitere in Lösemittel lösliche Hilfsmittel, wie beispielsweise Oxalkylierungsprodukte von Fettalkoholen, Alkylphenolen und Fettsäuren, enthalten.

Zur Herstellung von Drucken auf den synthetischen Fasermaterialien, beispielsweise aus Polyestern, können die erfindungsgemäßen Farbstoffe in Form wasserhaltiger Zubereitungen angewandt werden, die neben dem fein verteilten Farbstoff geeignete Verdickungsmittel und Fixierbeschleuniger enthalten können. Die Fixierung der Farbstoffe erfolgt beispielsweise nach dem Drucken und Trocknen durch Dämpfen bei Atmosphärendruck oder unter erhöhtem Druck bis zu 2,5 atü während 10 bis 60 Minuten.

Ebenso kann die Fixierung der Farbstoffe durch die Einwirkung von Heißluft von 160° bis 210°C während 30 Sekunden bis 10 Minuten bewirkt werden.

Die hier beschriebenen Azlactonfarbstoffe eignen sich auch besonders für die Massefärbung, insbesondere die Spinnfärbung, weil sie eine hervorragende Thermostabilität bis zu Temperaturen von 300°C aufweisen.

An wasserunlöslichen, thermoplastischen Polymerisaten bzw. Polykondensaten seien Polystyrol, Polymethacrylat, Polyamid, weichmacherfreies Polyvinylchlorid und insbesondere lineare Polyester, wie beispielsweise Polyäthylenglykolterephthalat, genannt.

Zur Durchführung des Verfahrens können die oben genannten Farbstoffe den Ausgangsstoffen bei der Kondensation zur Herstellung der Polykondensate, wie Polyester, zugesetzt werden. Ebenso ist es für die Herstellung der Färbungen möglich, die Farbstoffe auf die fertigen, noch nicht verformten Polymerisate bzw. Polykondensate, wie beispielsweise Polyestermaterialien, aufzubringen, z. B. durch Aufpudern oder Vermischen, und das so behandelte Material dann einem Schmelzprozeß zur endgültigen Vermischung und Formgebung zu unterwerfen. Zur Formgebung können die in dieser Weise gefärbten Polymerisate bzw. Polykondensate, wie beispielsweise Polyestermaterialien aus der Schmelze auf den üblichen Anlagen beispielsweise zu Fäden versponnen, zu Folien gezogen oder durch Spritzen in eine bestimmten Form gebracht werden.

Der Farbstoffgehalt der verfahrensgemäß gefärbten Materialien richtet sich nach der gewünschten Farbtiefe. Im allgemeinen werden Farbstoffmengen zwischen etwa 0,05 und 3%, bezogen auf das Gewicht des thermoplastischen Materials, eingesetzt.

Mit den neuen Farbstoffen lassen sich brillante gelbe bis rote Färbungen mit guten Echtheitseigenschaften, insbesondere guten Licht- und Sublimierechtheiten erzielen. Man erhält weiter mit diesen Farbstoffen nach den üblichen Methoden der Massefärbung farbstarke, brillante, gelbe bis rote Färbungen, die meist sehr gute Licht- und Reibechtheiten, eine vorzügliche Thermofixierechtheit und insbesondere eine hervorragende Thermostabilität aufweisen.

Ein besonderer Vorteil der hier beschriebenen Farbstoffe liegt darin, daß die Endkomponenten A und B der allgemeinen Formel (1) verschieden sein können. Solche Farbstoffe werden auf dem Azlactonfarbstoff-Gebiet bis jetzt nicht beschrieben. In den deutschen Patentschriften 1 809 949 und 2 225 546 und den deutschen Offenlegungsschriften 2 031 133, 2 408 846 und 2 415 819 sind die Endkomponenten in einem Farbstoff gleich. Setzt man dort zwei verschiedene Endkomponenten ein, so erhält man Gemische von drei Azlactonfarbstoffen. Bei den erfindungsgemäßen Farbstoffen bestehen größere Möglichkeiten, einen spezifischen Farbton zu erhalten.

In den folgenden Beispielen beziehen sich Angaben über Teile und Prozente, sofern nicht anders vermerkt, auf das Gewicht.

Beispiel 1

35,0 g (0,1 Mol) der substituierten Hippursäure der Formel

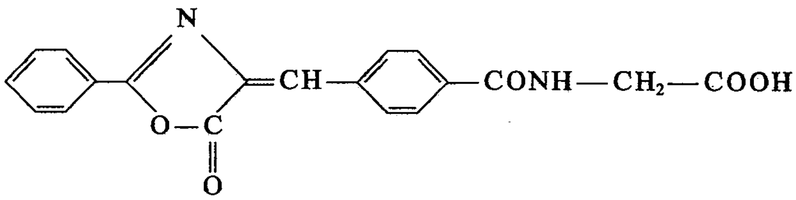

die durch Kondensation von Hippursäure mit 4-Formylbenzoesäure, Überführung in das Säurechlorid und Umsetzung mit Glycin erhältlich ist, und 13,6 g (0,1 Mol) 4-Methoxybenzaldehyd werden in 120 ml Acetanhydrid unter Zusatz von 5 g Natriumacetat wasserfrei 3 Stunden unter Rückfluß zum Sieden erhitzt. Zur Reaktionsmischung werden dann 180 ml Wasser hinzugegeben und man rührt weitere 30 Minuten bei etwa 80° C. Anschließend wird die noch warme Suspension abgesaugt und mit 250 ml Wasser, das auf 70° C erwärmt ist, gewaschen. Danach trocknet man den Farbstoff, der der folgenden Formel entspricht, bei etwa 70° C.

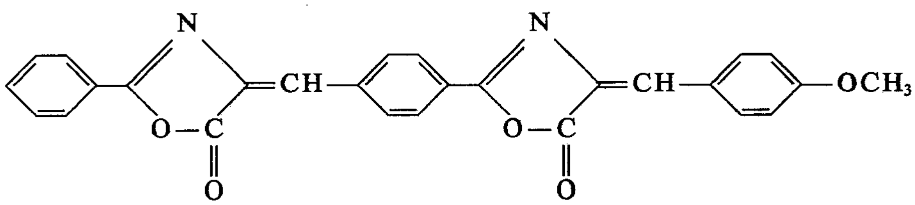

Man erhält 38,2 g eines gelben Pulvers, das auf Polyesterfasern eine brillante, rotstichig gelbe Färbung von recht guter Lichtechtheit und sehr guter Sublimierechtheit ergibt. Setzt man den Farbstoff bei der Spinnfärbung von Polyester ein, so erhält man brillante, rotstichig gelbe Polyesterfasern.

Beispiel 2

35,0 g (0,1 Mol) der in Beispiel 1 eingesetzten substituierten Hippursäure und 14,0 g (0,1 Mol) 4-Chlorbenzaldehyd werden in 120 ml Acetanhydrid unter Zusatz von 5 g Natriumacetat wasserfrei 4 Stunden unter Rückfluß zum Sieden erhitzt. Die Isolierung des Farbstoffs erfolgt wie in Beispiel 1 beschrieben.

Man erhält 38,6 g des Farbstoffes der folgenden Formel,

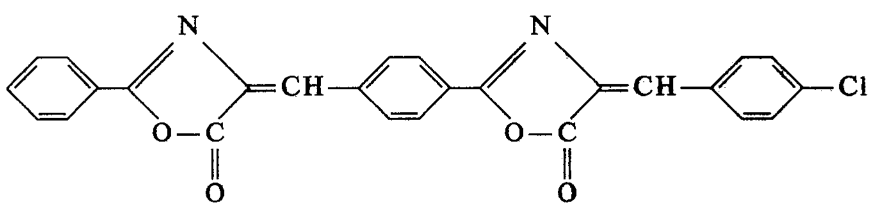

der als gelbes Pulver vorliegt. Der Farbstoff färbt Polyesterfasern in brillantem, grünstichig gelben Farbton. Einen entsprechenden Farbton erhält man bei Einsatz des Farbstoffs bei der Spinnfärbung von Polyestern.

Beispiel 3

38,4 g (0,1 Mol) der substituierten Hippursäure der folgenden Formel

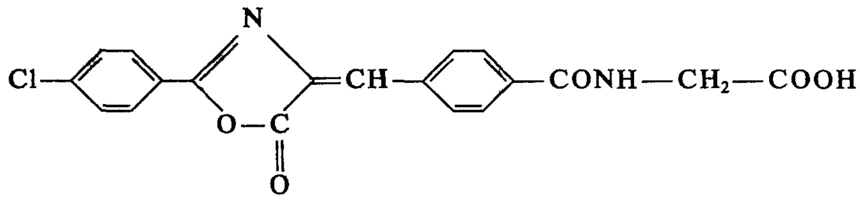

und 10,6 (0,1 Mol) Benzaldehyd werden in 120 ml Acetanhydrid unter Zusatz von 5 g Natriumacetat wasserfrei 3 Stunden unter Rückfluß zum Sieden erhitzt. Die Isolierung des Farbstoffs erfolgt wie in Beispiel 1 beschrieben.

Man erhält 39,4 g des Farbstoffs der folgenden Formel

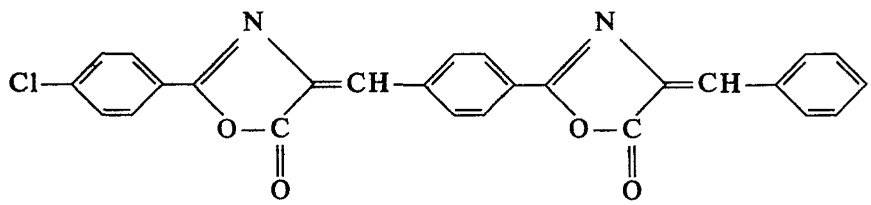

der als gelbes Pulver anfällt. Der Farbstoff färbt nach den herkömmlichen Färbe- und Druckverfahren sowie bei Einsatz in der Spinnfärbung Polyester in brillantem, grünstichig gelben Farbton. Die Färbungen und Drucke weisen sehr gute Lichtechtheit und Sublimierechtheit auf.

Beispiel 4

35,0 g (0,1 Mol) der in Beispiel 1 eingesetzten substituierten Hippursäure und 17,7 g (0,1 Mol) 4-Diäthylaminobenzaldehyd werden in 140 ml Acetanhydrid unter Zusatz von 4 g Natriumacetat wasserfrei 4 Stunden unter Rückfluß zum Sieden erhitzt. Die Isolierung des Farbstoffs erfolgt wie in Beispiel 1 beschrieben.

Man erhält 41,7 g des Farbstoffs der folgenden Formel

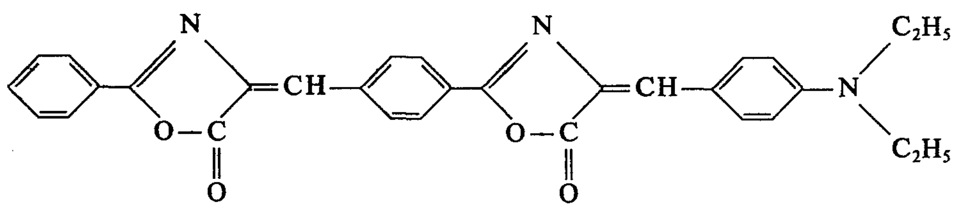

der als grauschwarzes Pulver anfällt. Der Farbstoff färbt Polyesterfasern in einem neutralen, roten Farbton. Einen entsprechenden Farbton erhält man bei Einsatz des Farbstoffs bei der Spinnfärbung von Polyestern.

In der nachstehenden Tabelle werden weitere Farbstoffe aufgeführt, die nach den vorstehend genannten Methoden hergestellt werden können und durch die angegebenen Farbtöne auf Polyesterfasern charakterisiert werden:

| Beispiel | Farbstoff | Farbton auf PES |
|---|---|---|
| 5 | 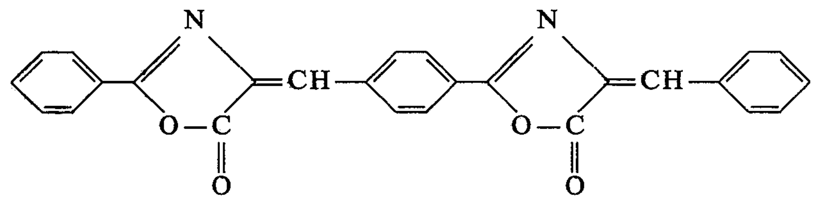 | grünstichig gelb |
| 6 | 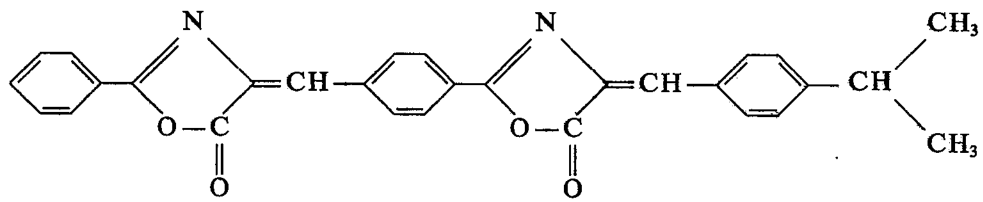 | gelb |
| 7 | 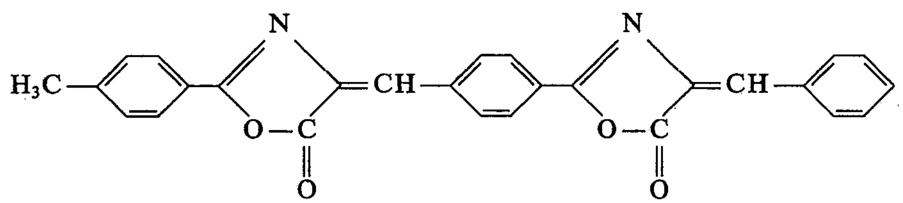 | gelb |
| 8 | 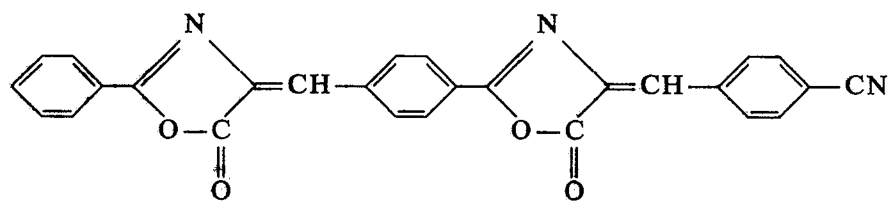 | grünstichig gelb |
| 9 | 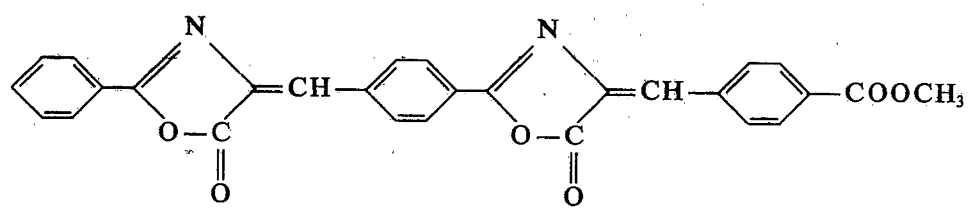 | grünstichig gelb |

Fortsetzung

| Beispiel | Farbstoff | Farbton auf PES |
|---|---|---|
| 10 | 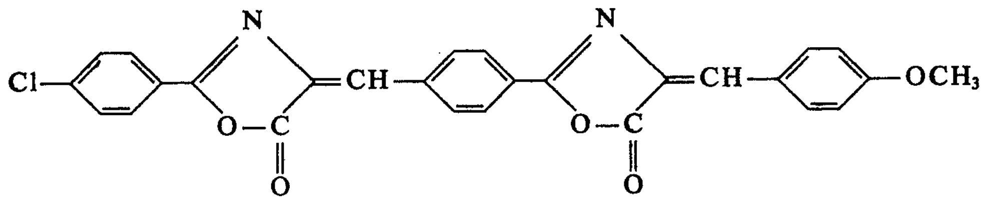 | gelb |
| 11 | 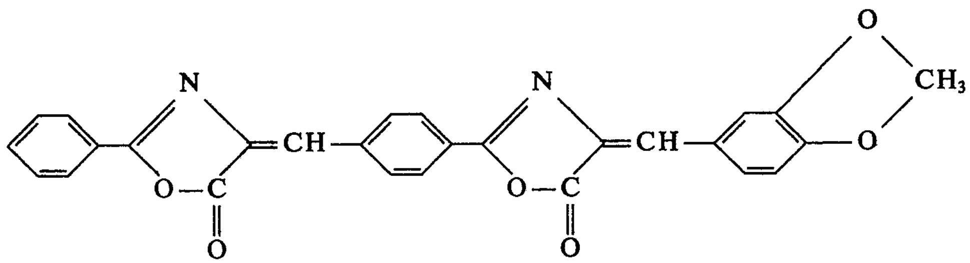 | orange |
| 12 | 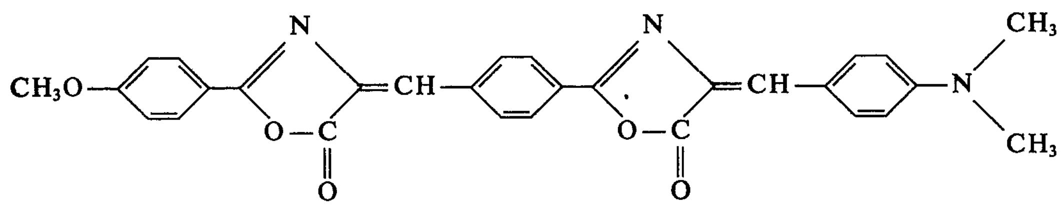 | rot |
| 13 | 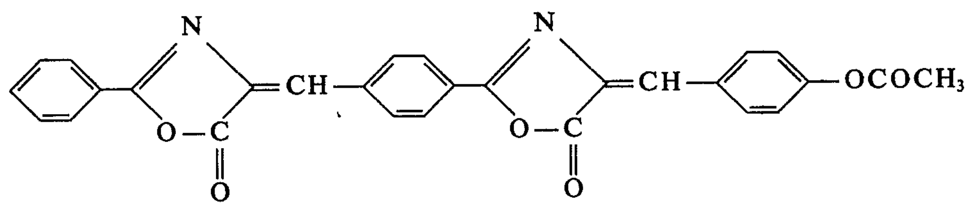 | grünstichig gelb |
| 14 | 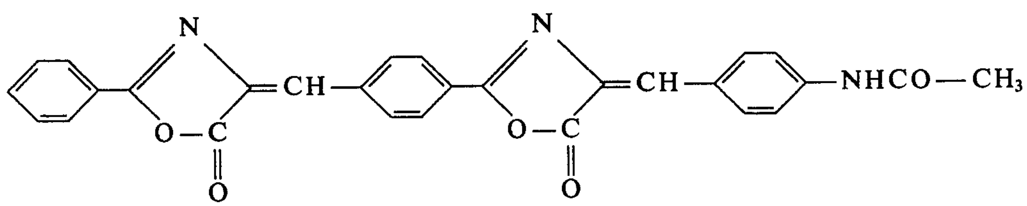 | rotstichig gelb |

Fortsetzung

| Beispiel | Farbstoff | Farbton auf PES |
| --- | --- | --- |
| 15 | 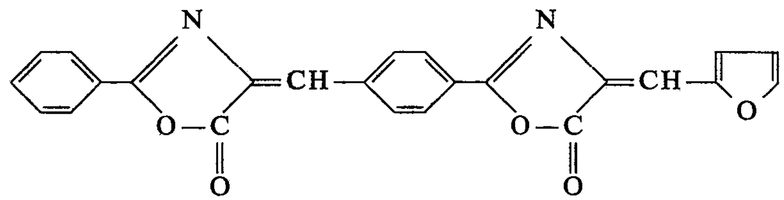 | rotstichig gelb |
| 16 | 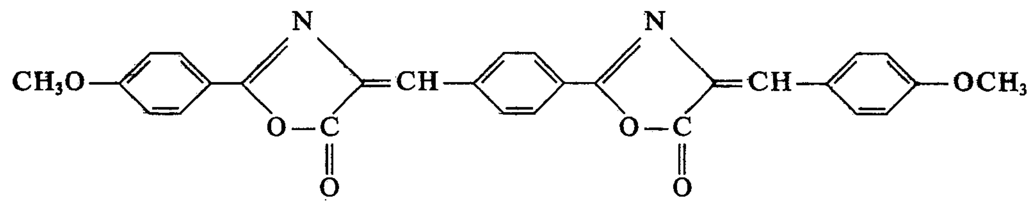 | orange |
| 17 | 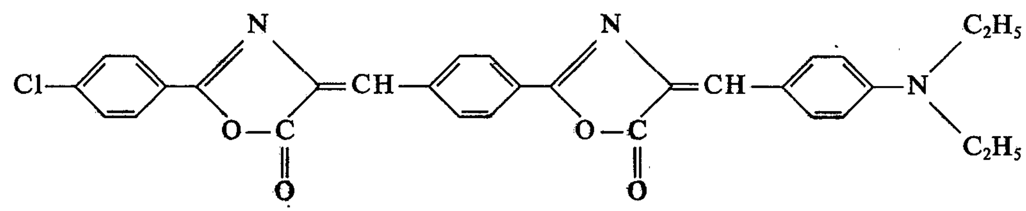 | gelbstichig rot |
| 18 | 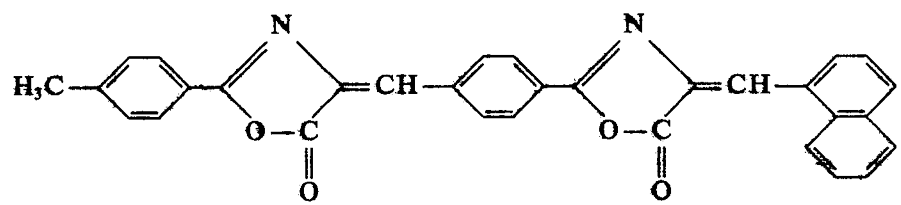 | gelb |
| 19 | 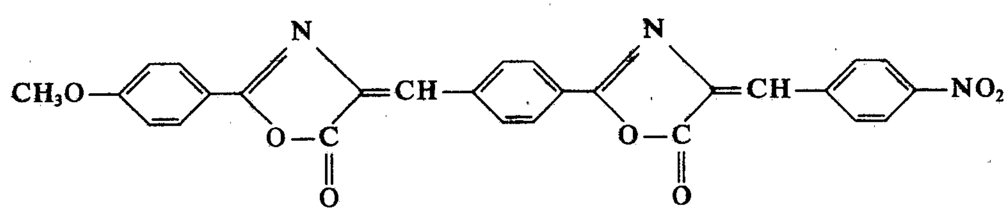 | gelb |

**Fortsetzung**

| Beispiel | Farbstoff | Farbton auf PES |
|---|---|---|
| 20 | 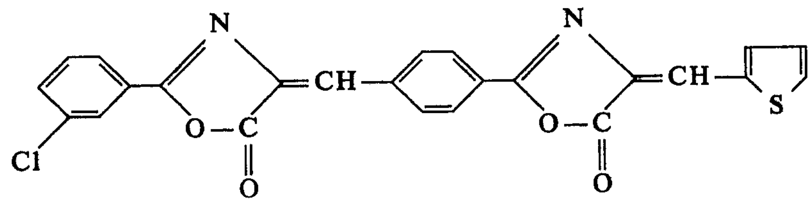 | gelb |
| 21 | 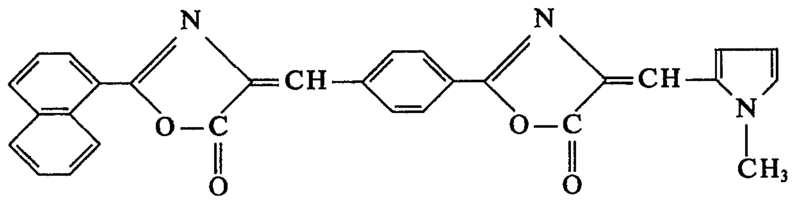 | rotstichig gelb |
| 22 | 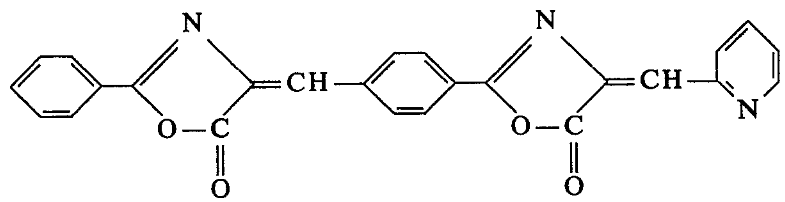 | orange |
| 23 | 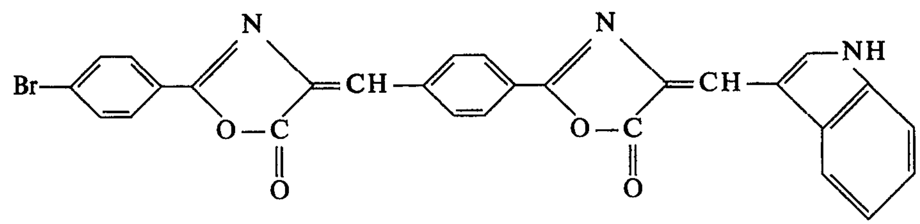 | orange |
| 24 | 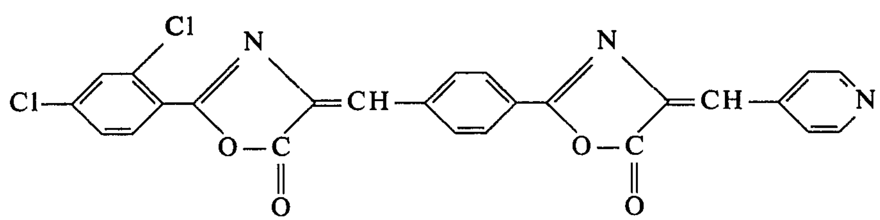 | gelbstichig rot |

Fortsetzung

| Beispiel | Farbstoff | Farbton auf PES |
|---|---|---|
| 25 | 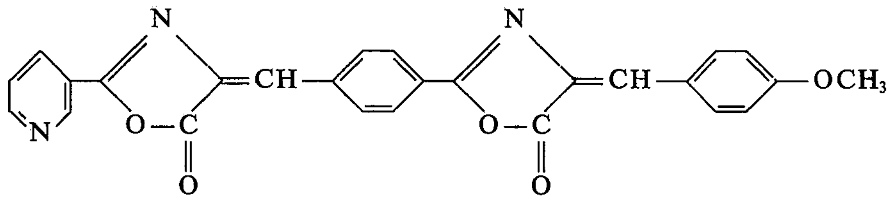 | orange |
| 26 | 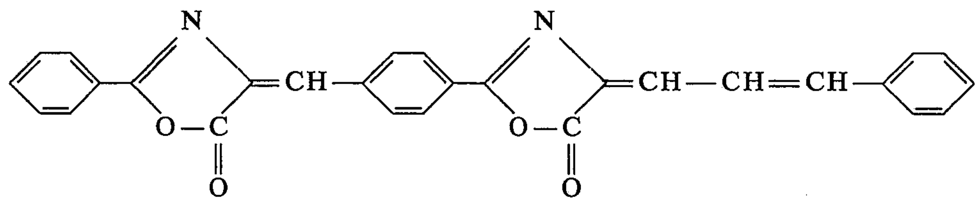 | rotstichig gelb |
| 27 | 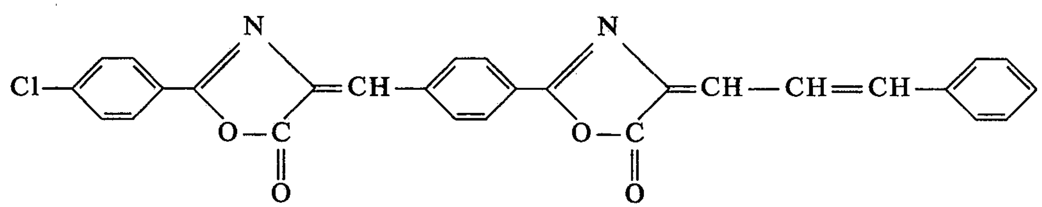 | gelb |
| 28 | 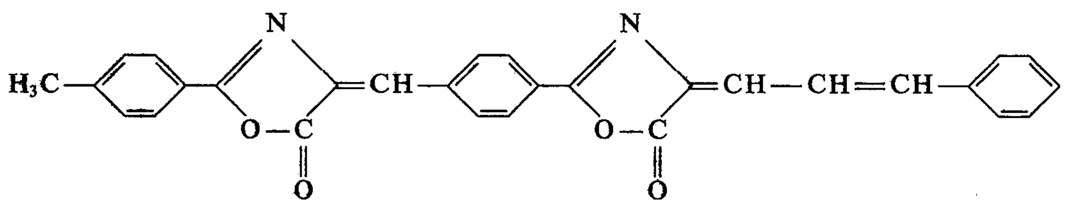 | rotstichig gelb |

**Patentansprüche**

1. Wasserunlösliche Azlactonfarbstoffe der Formel (1)

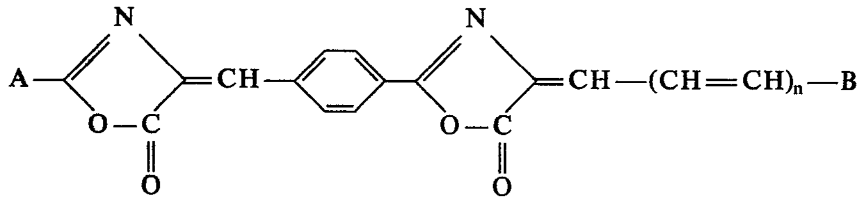 (1)

in welcher A einen Phenylrest, der durch Halogenatome, Alkyl- und/oder Alkoxygruppen mit 1 bis 4 Kohlenstoffatomen substituiert sein kann, einen Naphthyl- oder heterocyclischen Rest, B einen Phenylrest, der durch Halogenatome, Alkyl- und/oder Alkoxygruppen mit 1 bis 4 Kohlenstoffatomen, Nitro-, Cyano-, Acetamino-, Carbonsäuremethylester, Carbonsäureäthylester-, Acetoxy-, Dimethylamino-, Diäthylamino- oder Methylendioxy-Gruppen substituiert sein kann, einen Naphthyl- oder heterocyclischen Rest und n die Zahl 0 oder 1 bedeuten.

2. Wasserunlösliche Azlactonfarbstoffe der Formel (2),

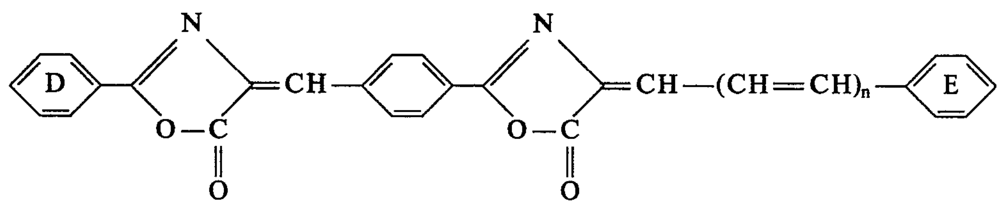 (2)

in welcher der Phenylrest D durch Halogenatome, Alkyl- und/oder Alkoxygruppen mit 1 bis 4 Kohlenstoffatomen, und der Phenylrest E durch Halogenatome, Alkyl- und/oder Alkoxygruppen mit 1 bis 4 Kohlenstoffatomen, Nitro-, Cyan-, Acetamino-, Acetoxy-, Carbonsäuremethylester-, Carbonsäureäthylester-, Dimethylamino-, Diäthylamino- oder Methylendioxy-Gruppen substituiert sein kann, und n die Zahl 0 oder 1 ist.

3. Farbstoff der Formel

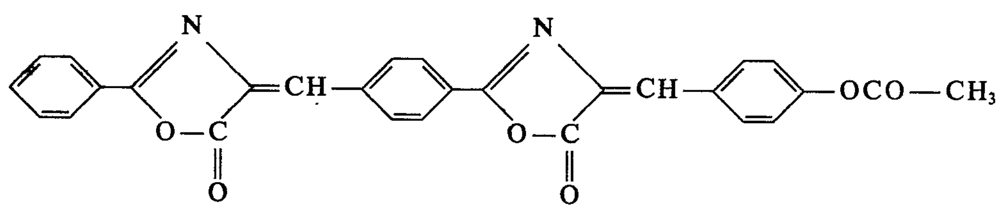

4. Farbstoff der Formel

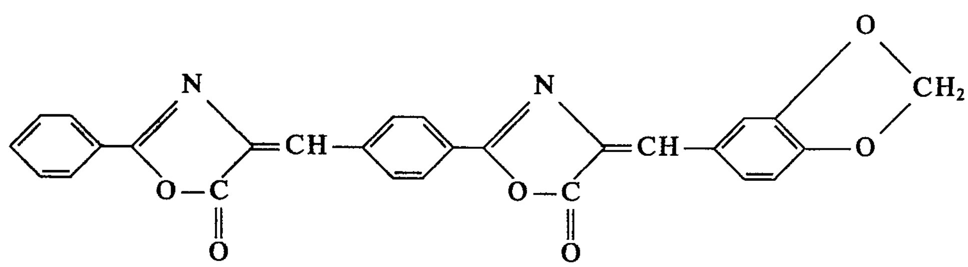

5. Farbstoff der Formel

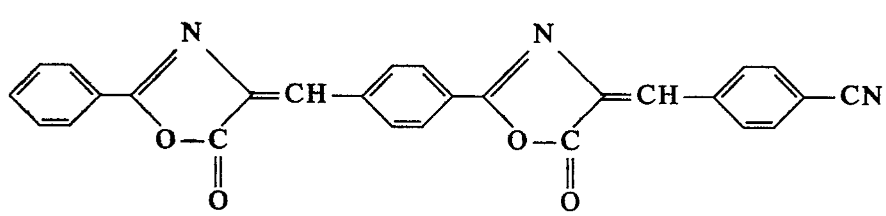

6. Farbstoff der Formel

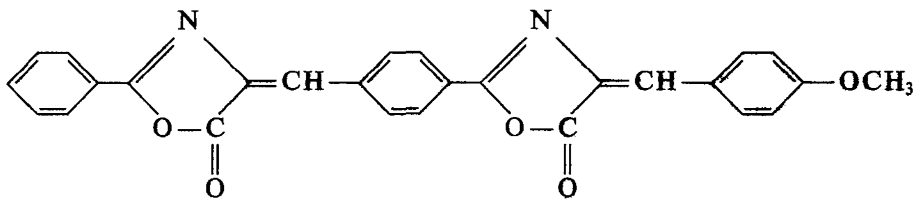

7. Verfahren zur Herstellung von wasserunlöslichen Azlactonfarbstoffen der Formel (1)

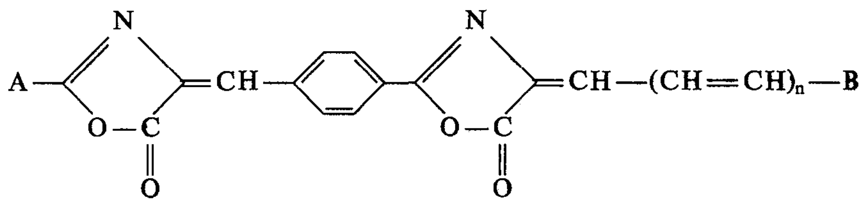 (1)

in welcher A einen Phenylrest, der durch Halogenatome, Alkyl- und/oder Alkoxygruppen mit 1 bis 4 Kohlenstoffatomen substituiert sein kann, einen Naphthyl- oder heterocyclischen Rest, B einen Phenylrest, der durch Halogenatome, Alkyl- und/oder Alkoxygruppen mit 1 bis 4 Kohlenstoffatomen, Nitro-, Cyano-, Acetamino-, Carbonsäuremethylester-, Carbonsäureäthylester-, Acetoxy-, Dimethylamino-, Diäthylamino- oder Methylendioxy-Gruppen substituiert sein kann, einen Naphthyl- oder heterocyclischen Rest und n die Zahl 0 oder 1 bedeuten, dadurch gekennzeichnet, daß man ein Vorprodukt der Formel

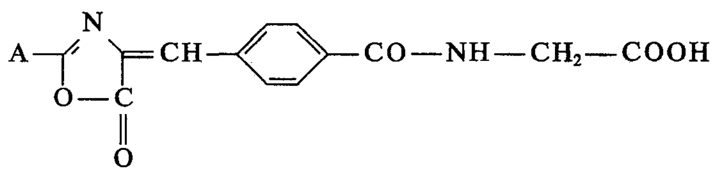

in welcher A die vorstehend genannte Bedeutung hat, mit einem Aldehyd der Formel

$$B{-}(CH{=}CH)_n{-}CHO$$

in welcher B und n die vorstehend genannten Bedeutungen haben, kondensiert.

8. Verfahren zur Herstellung von wasserunlöslichen Azlactonfarbstoffen der Formel (2)

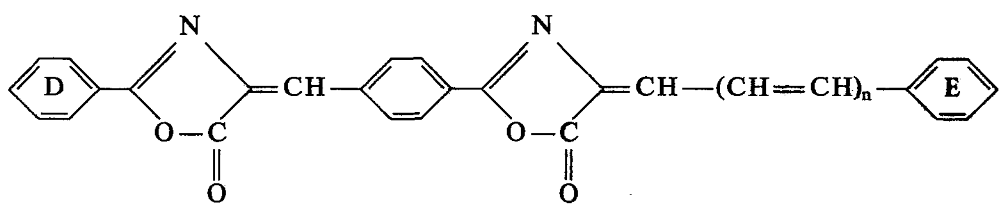 (2)

in welcher der Phenylrest D durch Halogenatome, Alkyl- und/oder Alkoxygruppen mit 1 bis 4 Kohlenstoffatomen, der Phenylrest E durch Halogenatome, Alkyl- und/oder Alkoxygruppen mit 1 bis 4 Kohlenstoffatomen, Nitro-, Cyan-, Acetamino-, Acetoxy-, Carbonsäuremethylester-, Carbonsäureäthylester-, Dimethylamino-, Diäthylamino- und Methylendioxy-Gruppen substituiert sein kann, und n die Zahl 0 oder 1 ist, dadurch gekennzeichnet, daß man ein Vorprodukt der Formel

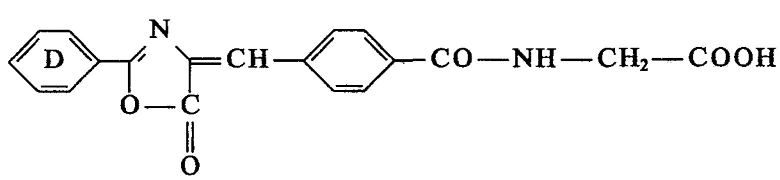

in welcher D die vorstehend genannte Bedeutung hat, mit einem Aldehyd der Formel

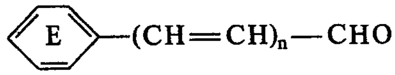

in welcher n und E die vorstehend genannten Bedeutungen haben, kondensiert.

9. Verfahren zur Herstellung von wasserunlöslichen Farbstoffen gemäß Ansprüchen 7 und 8, dadurch gekennzeichnet, daß die Kondensation bei einer Temperatur von 40° bis 200° C in organischen Lösemitteln vorgenommen wird.

10. Verfahren zur Herstellung von wasserunlöslichen Farbstoffen gemäß Ansprüchen 7 bis 9, dadurch gekennzeichnet, daß die Kondensation unter Zusatz eines basisch wirkenden Mittels vorgenommen wird.

11. Verwendung der in den Ansprüchen 1 bis 6 genannten wasserunlöslichen Farbstoffe zum Färben oder Bedrucken von synthetischen Fasermaterialien aus wäßriger Dispersion.

12. Verwendung der in den Ansprüchen 1 bis 6 genannten wasserunlöslichen Farbstoffe zum Spinnfärben von Polyestern.

**Claims**

1. Water-insoluble azlactone dyestuffs of the formula (1)

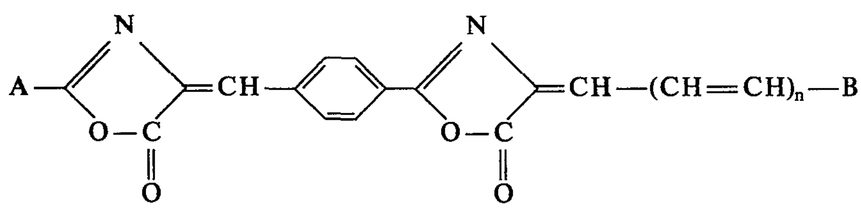
(1)

in which A denotes a phenyl radical, which can be substituted by halogen atoms, alkyl and/or alkoxy groups having 1 to 4 carbon atoms, or denotes a naphthyl radical or heterocyclic radical, B denotes a phenyl radical, which can be substituted by halogen atoms or alkyl and/or alkoxy groups having 1 to 4 carbon atoms or nitro, cyano, acetamino, carboxylic acid methyl ester, carboxylic acid ethyl ester, acetoxy, dimethylamino, diethylamino or methylenedioxy groups, or denotes a naphthyl radical or heterocyclic radical, and n denotes the number 0 or 1.

2. Water-insoluble azlactone dyestuffs of the formula (2)

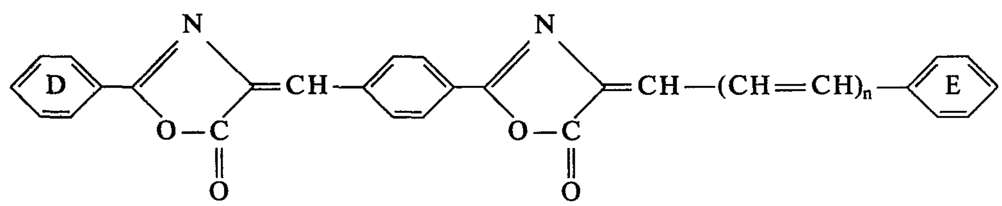
(2)

in which the phenyl radical D can be substituted by halogen atoms or alkyl and/or alkoxy groups having 1 to 4 carbon atoms and the phenyl radical E can be substituted by halogen atoms or alkyl and/or alkoxy groups having 1 to 4 carbon atoms or nitro, cyano, acetamino, acetoxy, carboxylic acid methyl ester, carboxylic acid ethyl ester, dimethylamino, diethylamino or methylenedioxy groups, and n is the number 0 or 1.

3. The dyestuff of the formula

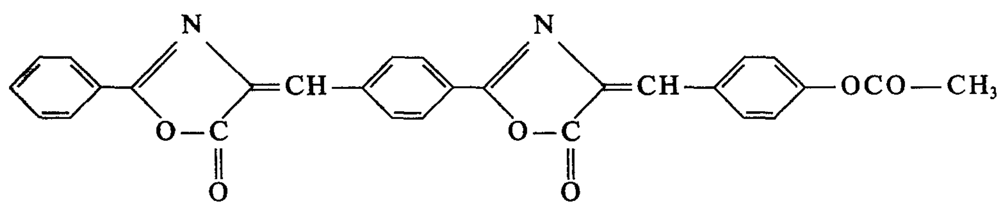

4. The dyestuff of the formula

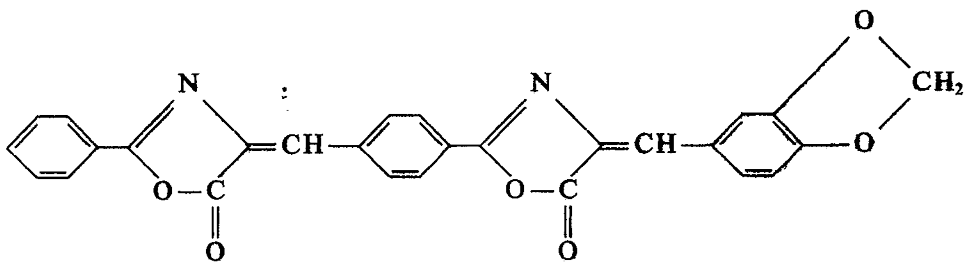

5. The dyestuff of the formula

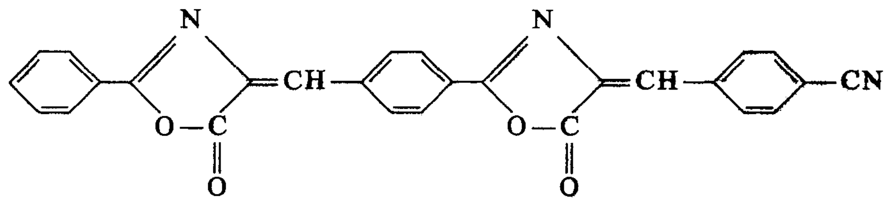

6. The dyestuff of the formula

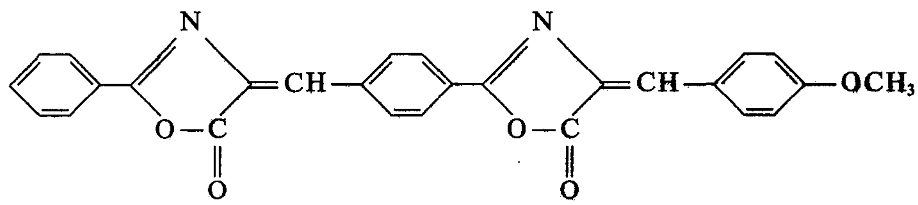

7. Process for the preparation of water-insoluble azlactone dyestuffs of the formula (1)

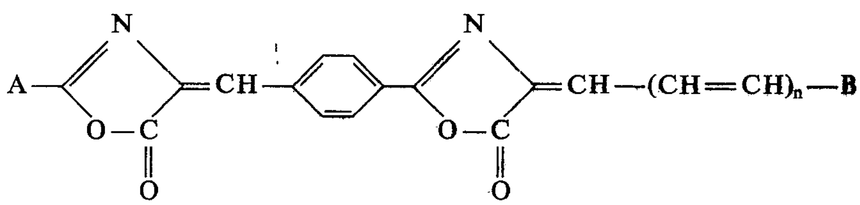
(1)

in which A denotes a phenyl radical, which can be substituted by halogen atoms or alkyl and/or alkoxy groups having 1 to 4 carbon atoms, or denotes a naphthyl radical or heterocyclic radical, B denotes a phenyl radical, which can be substituted by halogen atoms or alkyl and/or alkoxy groups having 1 to 4 carbon atoms or nitro, cyano, acetamino, carboxylic acid methyl ester, carboxylic acid ethyl ester, acetoxy, dimethylamino, diethylamino or methylenedioxy groups, or denotes a naphthyl radical or heterocyclic radical, and n denotes the number 0 or 1, which comprises subjecting a precursor of the formula

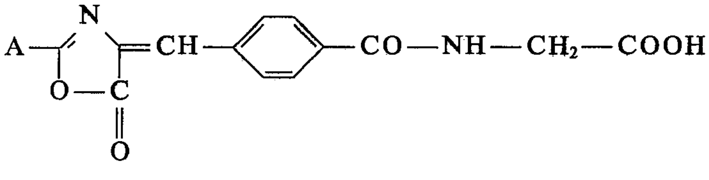

in which A is as defined above, to a condensation reaction with an aldehyde of the formula

$$B{-}(CH{=}CH)_n{-}CHO$$

in which B and n are as defined above.

8. Process for the preparation of water-insoluble azlactone dyestuffs of the formula (2)

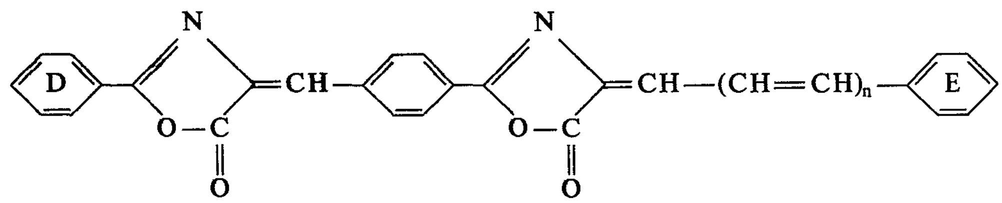 (2)

in which the phenyl radical D can be substituted by halogen atoms or alkyl and/or alkoxy groups having 1 to 4 carbon atoms, the phenyl radical E can be substituted by halogen atoms or alkyl and/or alkoxy groups having 1 to 4 carbon atoms or nitro, cyano, acetamino, acetoxy, carboxylic acid methyl ester, carboxylic acid ethyl ester, dimethylamino, diethylamino and methylenedioxy groups, and n is the number 0 or 1, which comprises subjecting a precursor of the formula

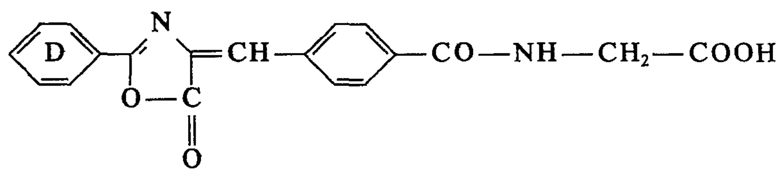

in which D is as defined above, to a dondensation reaction with an aldehyde of the formula

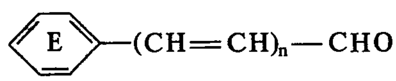

in which n and E are as defined above.

9. Process for the preparation of water-insoluble dyestuffs as claimed in claims 7 and 8, wherein the condensation reaction is carried out at a temperature of 40° to 200° C in organic solvents.

10. Process for the preparation of water-insoluble dyestuffs as claimed in claims 7 to 9, wherein the condensation reaction is carried out with the addition of an agent having a basic action.

11. Use of the water-insoluble dyestuffs indicated in claims 1 to 6 for dyeing or printing synthetic fiber materials from an aqueous dispersion.

12. Use of the water-insoluble dyestuffs indicated in claims 1 to 6 for spin-dyeing polyesters.

**Revendications**

1. Colorants d'azalactones insolubles dans l'eau, de formule (I):

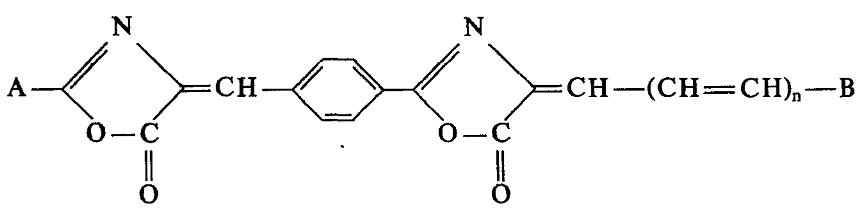 (I)

dans laquelle A représente un radical phényle être substitué par des atomes d'halogènes, par des groupes alkyles et/ou alcoxy en $C_1-C_4$, ou bien un radical naphthyle ou un radical hétérocyclique, B désigne un radical phényle pouvant être substitué par des atomes d'halogènes, des groupes alkyles et/ou alcoxy en $C_1-C_4$, les groupes nitro, cyano, acétamino, carboxylate de méthyle ou d'éthyle, acétoxy, diméthylamino, diéthylamino ou méthylène-dioxy, ou bien un radical naphtyle ou un radical hétérocyclique, et n désigne le nombre 0 ou 1.

2. Colorants d'azalactones insolubles dans l'eau, de formule (II):

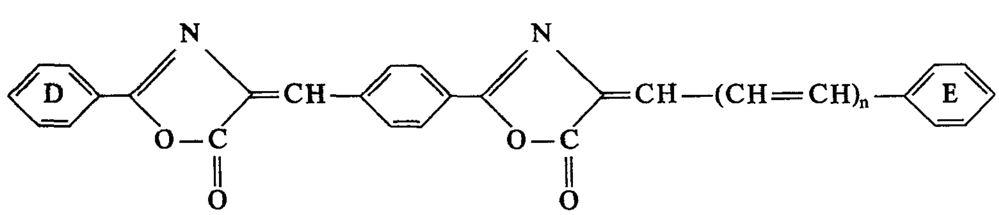 (II)

dans laquelle le radical phényle D peut être substitué par des atomes d'halogènes, des groupes alkyles et/ou alcoxy en $C_1-C_4$, et le radical phényle E par des atomes d'halogènes, des groupes alkyles et/ou alcoxy en $C_1-C_4$ et les groupes nitro, cyano, acétamino, acétoxy, carboxylate de méthyle ou d'éthyle, diméthylamino, diéthylamino ou méthylène-dioxy, et n désigne le nombre 0 ou 1.

3. Colorant de formule:

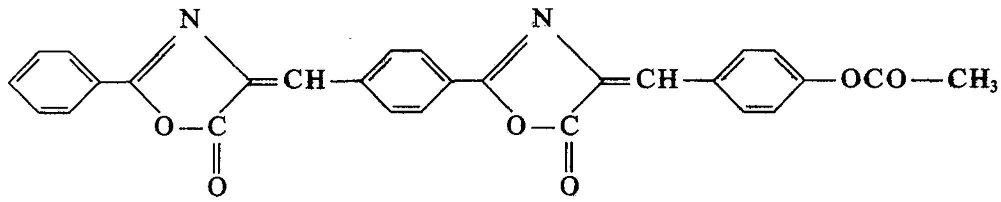

4. Colorant de formule:

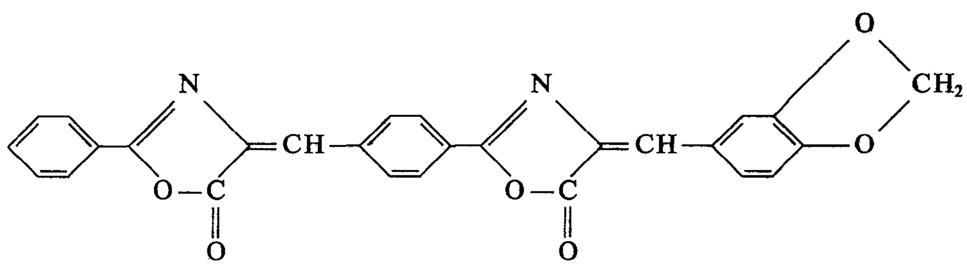

5. Colorant de formule:

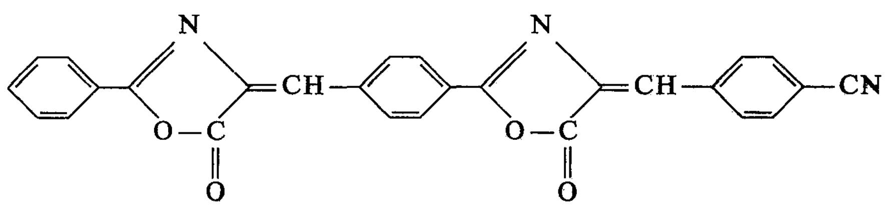

6. Colorant de formule:

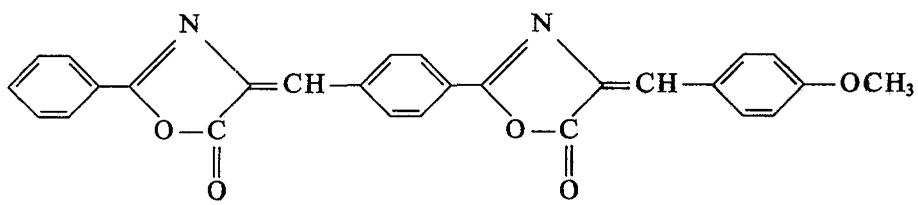

7. Procédé de préparation des colorants d'azalactones insolubles dans l'eau de formule (I):

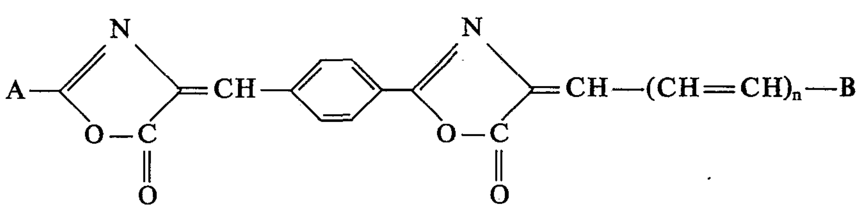
(I)

(dans laquelle A représente un radical phényle pouvant être substitué par des atomes d'halogènes, par des groupes alkyles et/ou alcoxy en $C_1-C_4$, ou bien un radical naphthyle ou un radical hétérocyclique, B désigne un radical phényle pouvant être substitué par des atomes d'halogènes, des groupes alkyles et/ou alcoxy en $C_1-C_4$, les groupes nitro, cyano, acétamino, carboxylate de méthyle ou d'éthyle, acétoxy, diméthylamino, diéthylamino ou méthylène-dioxy, ou bien un radical naphtyle ou un radical hétérocyclique, et n désigne le nombre 0 ou 1), procécédé caractérisé en ce que l'on condense un produit précurseur de formule:

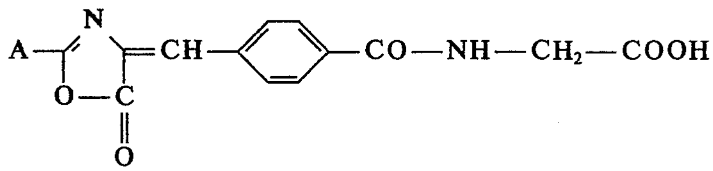

A ayant la signification ci-dessus, avec un aldéhyde de formule:

$$B-(CH=CH)_n-CHO$$

B et n ayant les significations précédentes.

8. Procédé de préparation des colorants d'azalactones insolubles dans l'eau de formule (II):

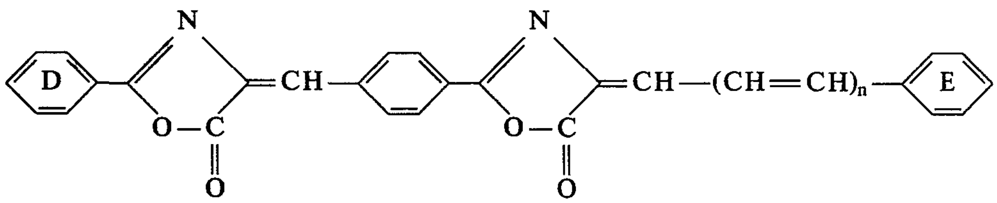 (II)

(dans laquelle le radical phényle D peut être substitué par des atomes d'halogènes, des groupes alkyles et/ou alcoxy en $C_1-C_4$, et le radical phényle E par des atomes d'halogènes, des groupes alkyles et/ou alcoxy en $C_1-C_4$ et les groupes nitro, cyano, acétamino, acétoxy, carboxylate de méthyle ou d'éthyle, diméthylamino, diéthylamino ou méthylène-dioxy, et n désigne le nombre 0 ou 1), procédé caractérisé en ce que l'on condense un produit précurseur de formule:

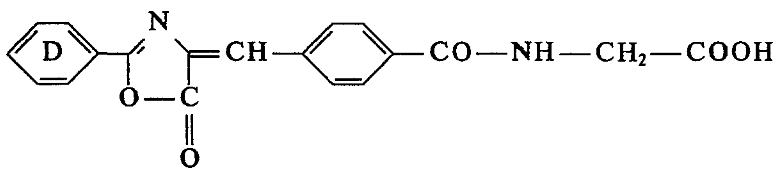

D ayant la signification précédente,
avec un aldéhyde de formule:

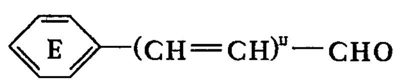

dans laquelle n et E ont les significations précédentes.

9. Procédé de préparation de colorants insolubles dans l'eau selon la revendication 7 ou 8, caractérisé en ce que la condensation est effectuée dans des solvants organiques à une température de 40 à 200° C.

10. Procédé de préparation de colorants insolubles dans l'eau selon l'une quelconque des revendications 7 à 9, caractérisé en ce que la condensation est effectuée en présence d'un agent à réaction basique.

11. L'utilisation des colorants insolubles dans l'eau selon l'une quelconque des revendications 1 à 6 pour la teinture et l'impression en dispersion aqueuse de matières fibreuses synthétiques.

12. L'utilisation des colorants insolubles dans l'eau selon l'une quelconque des revendications 1 à 6 pour la teinture au filage de polyesters.